# EUROPEAN PATENT SPECIFICATION

(11) **EP 2 221 151 B1**
(45) Date of publication and mention of the grant of the patent: **18.12.2024**
(21) Application number: 10250320.8
(22) Date of filing: 24.02.2010
(51) Int. Cl.: B25J 9/00, B64F 5/00, B64F 5/10

(54) **Autonomous robotic assembly system comprising a plurality of mobile robotic machines and a wireless communication system**
Autonomes Robotermontagesystem mit mehreren bewegbaren Robotern und einem drahtlosen Kommunikationssystem
Système d'assemblage robotique autonome comprenant plusieurs robots mobiles et un système de communication sans fil

(30) Priority: 24.02.2009 US 391780
(43) Date of publication of application: 25.08.2010
(73) Proprietor: The Boeing Company, Arlington, VA 22202 (US)
(72) Inventor: Branko, Sarh, Huntington Beach, California 92648 (US); Amirehteshami, David H., Rossmoor, California 90720 (US)
(74) Representative: Boult Wade Tennant LLP

(56) References cited:
- EP-A2- 1 686 048
- EP-A2- 1 884 453
- JP-A- H05 233 059
- US-A- 4 926 544
- US-A- 6 098 260

## Description

### BACKGROUND INFORMATION

The present disclosure relates generally to manufacturing objects and, in particular, to an automated system for assembling objects. Still more particularly, the present disclosure relates to a method and apparatus for assembling aircraft structures using an autonomous robotic assembly system.

Assembly of structures may involve the use of machines, tools, human labor, materials, and/or other suitable items for creating objects. Various assembly line techniques may be used to manufacture objects, such as aircraft structures. With an assembly line, various stationary machines may be positioned along the assembly line to add a part, drill a hole, hold a part, and/or perform some other suitable operation during the assembly of an aircraft structure.

With this type of assembly system, each assembly line may be designed for a particular type of aircraft structure. For example, without limitation, one assembly line may be designed to manufacture aircraft wings, while another assembly line may be designed to manufacture fuselages.

For a particular type of structure, machines may be secured to the floor or may be moveable along rails installed onto the floor and/or in trenches in the floor. Further, with this type of assembly system, conduits, trenches, and/or other suitable structures may be used to run power cables, data lines, and/or other suitable utilities to these machines.

Although these types of assembly lines may provide for decreased cost with economies of scale, these types of assembly systems may be expensive to design and install. For example, although an assembly line may be adaptable to assemble a wing structure for different types of commercial aircraft having a similar size, a separate assembly line may be required to manufacture fuselages. With this limited flexibility, increased space may be required to assemble different types of aircraft structures.

Therefore, it would be advantageous to have a method and apparatus that takes into account one or more of the issues discussed above, as well as possibly other issues.

US 4926544, in accordance with its abstract, states in order to simplify production line layout and revision, a plurality of unmanned self-propelled vehicles are used. Some vehicles carry a work piece from station to station while auxiliary vehicles which remain at each station carry components and assembly robots. Transport vehicle are used to move new components from storage sites to the work place. To facilitate large scale operations a camera can be used to observe the vehicles and compare with movement pattern with a predetermined desired one in order to ascertain appropriate movement.

EP 1686048, in accordance with its abstract, states a system for welding of sheet-metal structures, in particular motor-vehicle bodies or sub-assemblies thereof, includes locating frames carrying locating and locking devices of the structures to be welded. The locating frame is provided with a wireless communication port for the communication of the input and output control signals of one or more electric equipments arranged on the locating frame. The power electric supply to the electric equipments on the locating frame is obtained through a contactless magnetic induction supply system.

JP H05 233059 , in accordance with its abstract, states first and second robots for work to execute work to a work object and a robot for carrying materials or the like are arranged. A robot for control and monitor is arranged for organically working these robots. A satellite robot is arranged so as to execute communication among the robots even when there is any wall or construction as obstacles. A robot for power supply is arranged for supplying power to the respective robots. A control panel is arranged for remotely operating the respective robots.

US 6,098,260, in accordance with its abstract, states there is provided a fastening assembly system for applying fasteners along the seams of a cylindrical structure. The fastening apparatus includes a base unit which releasably attaches to a cylindrical structure, and a first fastening device coupled the base unit for applying fasteners along a seam of the cylindrical structure. The base unit may be embodied as either two crescent shaped members in parallel alignment for attaching to the upper half of the cylindrical structure. Alternatively, the base unit may include a base plate that is attachable to the floor beams on the interior of the cylindrical structure. The first fastening device cooperate with a second fastening device located on the opposite side of the cylindrical structure during the fastening process.

EP 1 884 453, in accordance with its abstract, states there is provided a chassis with a first set of legs with suction pads on tilting supports mounted in a linearly displaceable manner with regard to the chassis and a second set of legs with suction pads mounted in a rotary manner with regard to the chassis. Certain control means are adapted in order to control the functioning of said first and second sets of legs in a coordinated manner for displacing the chassis in any direction on the work surface. It includes support feet and a system for levelling the chassis in relation to a curvature of the work surface. Fitted on the chassis is a work unit with a head for working on the work surface via an opening in the chassis. It includes means for displacing said head along three axes and pivoting the head on two axes with respect to the chassis.

### SUMMARY

There is described herein an apparatus comprising:
a plurality of mobile robotic machines (326) capable of moving to a number of locations (352) in an assembly area (316) and capable of performing operations to assemble a structure (302) in the assembly area;
a wireless communications system (324) capable of providing communications with the plurality of mobile robotic machines within the assembly area; and
a motion control system (322) capable of generating position information (346) for the plurality of mobile robotic machines in the assembly area and communicating the position information to the plurality of mobile robotic machines; wherein:
   performing the operations to assemble the structure uses the position information and comprises:
      communicating messages between the plurality of mobile robotic machines (326); and
      performing a number of operations to assemble the structure using the messages;
   the wireless communications system is adapted to exchange information between the plurality of mobile robotic machines; and
   the plurality of mobile robotic machines comprises:
      an external mobile robotic machine (330) having an electromagnet (793) and capable of moving around an exterior (304) of the structure and capable of performing a number of first operations on the exterior of the structure; and
an internal mobile (328) robotic machine having a flexible arm (790) and capable of performing a number of second operations in an interior (306) of the structure and capable of performing the number of second operations in conjunction with the number of first operations performed by the external mobile robotic machine to assemble the structure.

There is also described herein a method for assembling a structure, the method comprising:
establishing communications with a plurality of mobile robotic machines (326) capable of moving to a number of locations (352) in an assembly area (316) and capable of performing operations to assemble the structure (302) in the assembly area using a wireless communications system;
identifying position information for the plurality of mobile robotic machines using a motion control system (322);
sending information to the plurality of mobile robotic machines, wherein the information comprises the position information; and
performing the operations to assemble the structure using the position information by:
   communicating messages between the plurality of mobile robotic machines (326); and
   performing a number of operations to assemble the structure using the messages;
wherein:
the step of establishing communications comprises exchanging information between the plurality of mobile robotic machines; and
the plurality of mobile robotic machines comprises:
   an external mobile robotic machine (330) having an electromagnet (793) and capable of moving around an exterior (304) of the structure and capable of performing a number of first operations on the exterior of the structure; and
an internal mobile robotic machine (328) having a flexible arm (790) and capable of performing a number of second operations in an interior (306) of the structure and capable of performing the number of second operations in conjunction with the number of first operations performed by the external mobile robotic machine to assemble the structure.

In one advantageous embodiment, an apparatus may comprise a plurality of mobile robotic machines, a wireless communications system, and a motion control system. The plurality of mobile robotic machines may be capable of moving to a number of locations in an assembly area and may be capable of performing operations to assemble a structure in the assembly area. The wireless communications system may be capable of providing communications with the plurality of mobile robotic machines within the assembly area. The motion control system may be capable of generating position information for the plurality of mobile robotic machines in the assembly area and communicating the position information to the plurality of mobile robotic machines.

In another advantageous embodiment, an assembly system may comprise an external mobile robotic machine and an internal mobile robotic machine. The external mobile robotic machine may be capable of moving around an exterior of a structure and may be capable of performing a number of first operations on the exterior of the structure. The internal mobile robotic machine may be capable of performing a number of second operations in an interior of the structure. The internal mobile robotic machine may also be capable of performing the number of second operations in conjunction with the number of first operations performed by the external mobile robotic machine to assemble the structure.

In yet another advantageous embodiment, a method may be present for assembling a structure. Communications with a plurality of mobile robotic machines may be capable of moving to a number of locations in an assembly area and may be capable of performing operations to assemble the structure in the assembly area may be established using a wireless communications system. Position information for the plurality of mobile robotic machines may be identified using a motion control system. Information may be sent to the plurality of mobile robotic machines. The information may comprise the position information. Operations may be performed to assemble the structure using the position information.

In still another advantageous embodiment, a method is present for assembling an aircraft structure. Communications may be established with a plurality of mobile robotic machines capable of moving to a number of locations in an assembly area and capable of performing operations to assemble the aircraft structure in the assembly area using a wireless communications system. Position information for the plurality of mobile robotic machines may be identified using a motion control system. Information may be sent to the plurality of mobile robotic machines. The information comprises at least one of the position information and a number of programs and commands. Messages may be communicated between the plurality of mobile robotic machines. The operations to assemble the aircraft structure may be performed using the information and the messages.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
**Figure 1** is an illustration of an aircraft manufacturing and service method in accordance with an advantageous embodiment;
**Figure 2** is an illustration of an aircraft in which an advantageous embodiment may be implemented;
**Figure 3** is an illustration of an assembly environment in accordance with an advantageous embodiment;
**Figure 4** is an illustration of an assembly process in accordance with an advantageous embodiment;
**Figure 5** is an illustration of a data processing system in accordance with an advantageous embodiment;
**Figure 6** is an illustration of a mobile robotic machine in accordance with an advantageous embodiment;
**Figure 7** is an illustration of an assembly environment in accordance with an advantageous embodiment;
**Figure 8** is an illustration of an assembly environment in accordance **with** an advantageous embodiment;
**Figure 9** is an illustration of an assembly area in accordance with an advantageous embodiment;
**Figure 10** is an illustration of a flowchart of a process for assembling a structure in accordance with an advantageous embodiment;
**Figure 11** is an illustration of a flowchart of a process for assembling a structure in accordance with an advantageous embodiment;
**Figure 12** is an illustration of a flowchart of a process for assembling a structure in accordance with an advantageous embodiment;
**Figures 13A-13D** are an illustration of a flowchart of a process for assembling an aircraft structure in accordance with an advantageous embodiment; and
**Figure 14** is an illustration of a flowchart of a process for performing operations on a structure in accordance with an advantageous embodiment.

### DETAILED DESCRIPTION

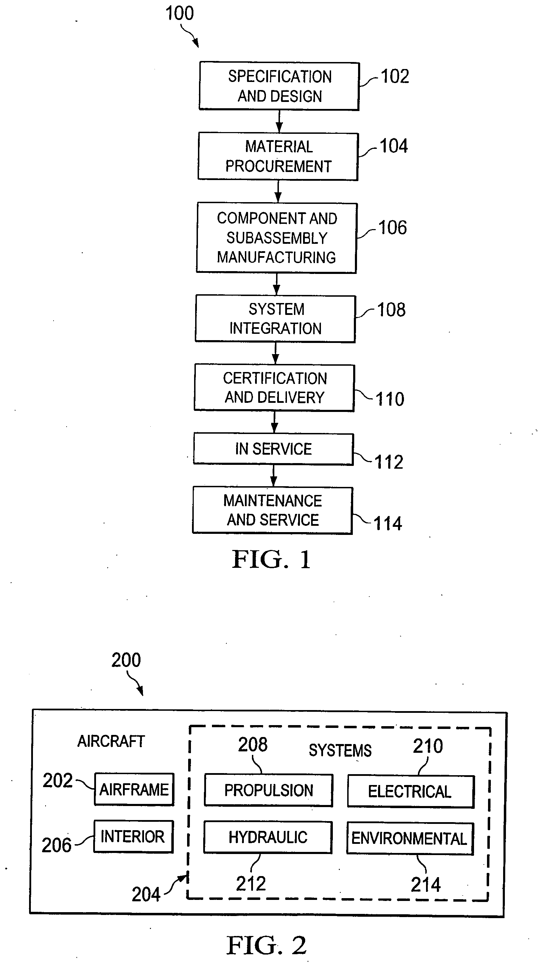

Referring more particularly to the drawings, embodiments of the disclosure may be described in the context of aircraft manufacturing and service method **100** as shown in **Figure 1** and aircraft **200** as shown in **Figure 2****.** Turning first to **Figure 1****,** a diagram illustrating an aircraft manufacturing and service method is depicted in accordance with an advantageous embodiment. During pre-production, aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure** 2 may go through certification and delivery **110** in order to be placed in service
While in service by a customer, aircraft **200** in **Figure 2** may be scheduled for routine maintenance and service **114,** which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

With reference now to **Figure 2****,** a diagram of an aircraft is depicted in which an advantageous embodiment may be implemented. In this example, aircraft **200** is produced by aircraft manufacturing and service method **100** in **Figure 1** and may include airframe **202** with a plurality of systems **204** and interior **206.** Examples of systems **204** include one or more of propulsion system **208,** electrical system **210,** hydraulic system **212,** and environmental system **214.** Any number of other systems may be included. Although an aerospace example is shown, different advantageous embodiments may be applied to other industries, such as the automotive industry.

Apparatus and methods embodied herein may be employed during any one or more of the stages of aircraft manufacturing and service method **100** in **Figure 1****.** For example, components or subassemblies produced in component and subassembly manufacturing **106** in **Figure 1** may be fabricated or manufactured in a manner similar to components or subassemblies produced while aircraft **200** is in service **112** in **Figure 1****.**

Also, one or more apparatus embodiments, method embodiments, or a combination thereof may be utilized during production stages, such as component and subassembly manufacturing **106** and system integration **108** in **Figure 1****,** for example, without limitation, by substantially expediting the assembly of or reducing the cost of aircraft **200.** Similarly, one or more of apparatus embodiments, method embodiments, or a combination thereof may be utilized while aircraft **200** is in service **112** or during maintenance and service **114** in **Figure 1****.**

The different advantageous embodiments take into account and recognize that although currently used manufacturing techniques may reduce the costs of manufacturing objects, such as aircraft structures, these techniques may be difficult to implement. The different advantageous embodiments recognize and take into account that a different assembly system may be required for different types of aircraft structures.

For example, the different advantageous embodiments recognize and take into account that an aircraft assembly system designed for manufacturing aircraft wings may not be suitable for use in manufacturing aircraft fuselages. The different advantageous embodiments recognize and take into account that the manufacturing floor may be specifically designed for a particular type of structure.

The different advantageous embodiments recognize and take into account that a different type of aircraft structure may require a different layout for which the existing layout cannot be modified. The different advantageous embodiments recognize and take into account that stationary machines may be difficult to move, replace, and/or remount in different locations for different types of aircraft structures. The different advantageous embodiments recognize and take into account that although this type of change may be made, the change may be time consuming and expensive.

The different advantageous embodiments also recognize and take into account that the trenches and conduits in the manufacturing floor may be even more difficult to change and/or reroute. The time and expense needed to reroute power lines, data lines, and/or other utilities may require creating new trenches and/or conduits in the ground of the manufacturing area. The different advantageous embodiments recognize and take into account that this type of change, along with removing and remounting stationary machines to new locations, may be expensive.

In addition, the different advantageous embodiments recognize and take into account that in addition to the expense, the time needed to make these changes may make the manufacturing facility unavailable during that period of time. As a result, the different advantageous embodiments recognize and take into account that manufacturing times may increase and/or may cause delays in delivering products.

Thus, one or more of the advantageous embodiments may provide an apparatus that comprises a plurality of mobile robotic machines, a wireless communications system, and a motion control system. The plurality of mobile robotic machines may be capable of moving to a number of locations in an assembly area and may be capable of performing operations to assemble a structure in the assembly area. A number, as used herein, refers to one or more items. For example, a number of locations may be one or more locations.

The wireless communications system may be capable of providing communications with the plurality of mobile robotic machines within the assembly area. The motion control system may be capable of generating position information for the plurality of mobile robotic machines in the assembly area and communicating the position information to the plurality of mobile robotic machines.

As a specific illustrative example, one or more of the different advantageous embodiments may be implemented during component and subassembly manufacturing **106** to assemble a structure for aircraft **200.** For example, the different advantageous embodiments may be used to assemble at least one of a wing, a fuselage, or some other suitable structure. As used herein, the phrase "at least one of", when used with a list of items, means that different combinations of one or more of the items may be used and only one of each item in the list may be needed. For example, "at least one of item A, item B, and item C" may include, for example, without limitation, item A or item A and item B. This example also may include item A, item B, and item C or item B and item C.

Further, the different advantageous embodiments also may be used during maintenance and service **114** to assemble replacement structures, perform maintenance on existing structures, perform repairs on existing structures, and/or other suitable operations for structures in aircraft **200.**

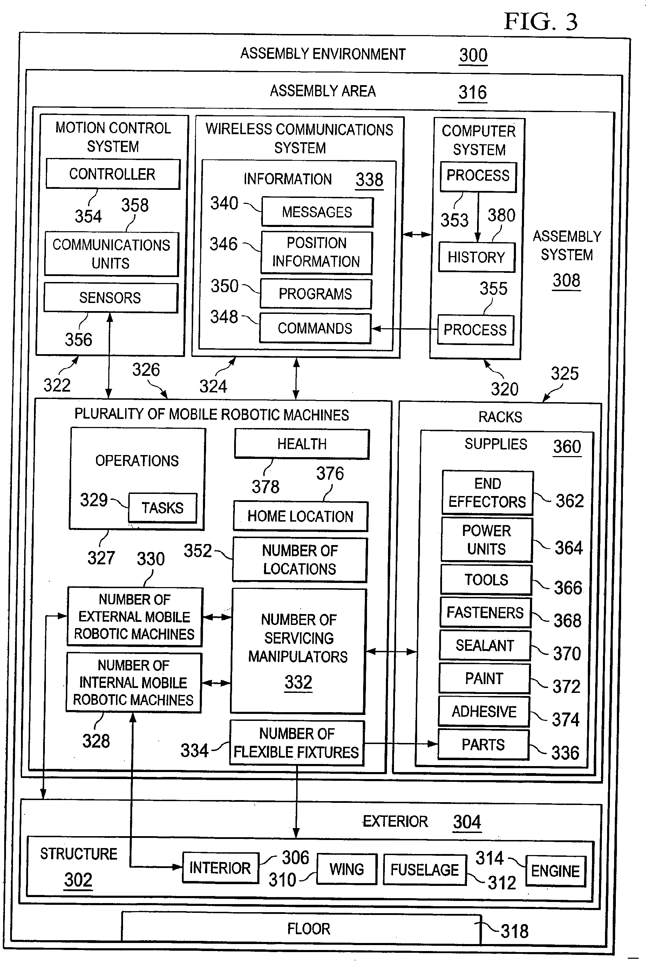

With reference now to **Figure 3****,** an illustration of an assembly environment is depicted in accordance with an advantageous embodiment. Assembly environment **300** is an example of an assembly environment that may be used to assemble structure **302.** Structure **302** may have exterior **304** and interior **306.**

In this illustrative example, assembly environment **300** may include assembly system **308.** In the different illustrative examples, assembly system **308** may be an autonomous assembly system that may reconfigure itself to perform assembly of different types of structures in a manner faster than currently available assembly systems.

Structure **302** may be a structure for an object such as, for example, aircraft **200** in **Figure 2****.** Structure **302** may take various forms. For example, without limitation, structure **302** may be wing **310,** fuselage **312,** engine **314,** and/or some other suitable type of structure.

In this illustrative example, structure **302** may be assembled in assembly area **316.** Assembly area **316** may include floor **318.** In this illustrative example, floor **318** may not require specialized fixed structures, trenches, underground conduits, and/or other infrastructures that may be used in currently available assembly environments.

Assembly system **308** may include computer system **320,** motion control system **322,** wireless communications system **324,** plurality of mobile robotic machines **326,** racks **325,** and/or other suitable components.

In these illustrative examples, plurality of mobile robotic machines **326** may perform operations **327** to assemble structure **302.** In these illustrative examples, plurality of mobile robotic machines **326** may include, for example, without limitation, number of internal mobile robotic machines **328,** number of external mobile robotic machines **330,** number of servicing manipulators **332,** number of flexible fixtures **334,** and/or other suitable types of mobile robotic machines.

Number of internal mobile robotic machines **328** may be capable of performing operations **327** in interior **306** of structure **302.** Number of internal mobile robotic machines **328** may move into interior **306** and/or reach into interior **306** of structure **302** to perform operations **327.** Number of external mobile robotic machines **330** may perform operations **327** on exterior **304** of structure **302.** In these illustrative examples, one or more of operations **327** may be grouped together to form a task within tasks **329.**

Number of servicing manipulators **332** may provide supplies to various robotic machines, such as number of internal mobile robotic machines **328** and number of external mobile robotic machines **330.** Number of flexible fixtures **334** may be capable of holding structure **302** and/or parts **336** for structure **302.** Parts **336** may be objects and/or materials used to assemble structure **302.** Number of flexible fixtures **334** also may be capable of positioning and/or moving structure **302.** For example, number of flexible fixtures **334** may be capable of moving and/or positioning structure **302** within assembly area **316** during assembly of structure **302.**

Further, number of flexible fixtures **334** may be capable of moving structure **302** out of assembly area **316** after assembly of structure **302** has been completed. Parts **336** may include, for example, without limitation, a panel, a frame, a rib, a spar, an engine casing, and/or some other suitable type of part.

In the illustrative examples, operations **327** may be, for example, without limitation, clamping, drilling, fastening, sealing, painting, sanding, routing, milling, inspecting, measuring, and/or other suitable types of operations.

Wireless communications system **324** are used to exchange information **338** between plurality of mobile robotic machines **326** and optionally between plurality of mobile robotic machines **326** and computer system **320.** Information **338** may be exchanged between different machines within plurality of mobile robotic machines **326** as well as between computer system **320** and plurality of mobile robotic machines **326.** Information 338 may include, for example, without limitation, messages **340,** position information **346,** commands **348,** programs **350,** and/or other suitable types of information.

Messages **340** may be, for example, without limitation, status messages, requests, alerts, errors, and/or other suitable types of messages. Position information **346** may provide a position for one or more of plurality of mobile robotic machines **326** within assembly area **316.** For example, plurality of mobile robotic machines **326** may be located in number of locations **352.** These locations, as well as positions of various portions of plurality of mobile robotic machines **326,** may form position information **346.**

Commands **348** may be issued by process **355** executed on computer system **320** and/or other machines within plurality of mobile robotic machines **326.** Programs **350** may contain computer readable instructions in a functional form that can be executed by plurality of mobile robotic machines **326** to perform operations **327.**

Programs **350** may be sent before and/or during execution of operations **327.** For example, if a particular mobile robotic machine in plurality of mobile robotic machines **326** completes a task, a new program in programs **350** may be sent to that robotic machine to cause the robotic machine to perform a new task.

Motion control system **322** may provide position information **346** for communication between plurality of mobile robotic machines **326** and/or computer system **320** over wireless communications system **324.** Motion control system **322** may include controller **354,** sensors **356,** communications units **358,** and/or other suitable components.

Sensors **356** may collect information about the position of plurality of mobile robotic machines **326,** parts **336,** and/or other suitable objects. Communications units **358** may receive information from sensors **356** and/or request position information **346** from sensors **356.**

Position information **346** may be used to avoid collisions of plurality of mobile robotic machines **326** with each other and/or other objects within assembly area **316.** Further, position information **346** may be used to coordinate performing operations **327** between plurality of mobile robotic machines **326.** Communications units **358** may include, for example, without limitation, transmitters, receivers, transceivers, and/or other suitable types of communication devices.

Controller **354** may distribute position information **346** over wireless communications system **324.** Sensors **356** may include, for example, without limitation, a camera, a global positioning system unit, a radio frequency identifier, and/or some other suitable type of sensor. Sensors **356** may be located on plurality of mobile robotic machines **326,** on floor **318** in assembly area **316,** and/or at other locations suitable for use in generating position information **346.**

In assembling structure **302,** racks **325** may provide supplies **360.** Supplies **360** may include, for example, without limitation, parts **336,** end effectors **362,** power units **364,** tools **366,** fasteners **368,** sealant **370,** paint **372,** adhesive **374,** and/or other suitable materials.

Further, racks **325** may be mobile and may move to and/or around number of locations **352** to provide supplies to plurality of mobile robotic machines **326.** In some advantageous embodiments, number of servicing manipulators **332** may obtain supplies **360** from racks **325** and transport supplies **360** to plurality of mobile robotic machines **326.**

With assembly system **308,** plurality of mobile robotic machines **326** may move from home location **376** to number of locations **352** to perform operations **327** to assemble structure **302.** In the different advantageous embodiments, plurality of mobile robotic machines **326** may move and change locations within number of locations **352** during the performance of operations
**327.**

Further, in some advantageous embodiments, structure **302** may remain stationary during the performance of operations **327.** In yet other advantageous embodiments, number of flexible fixtures **334** may reposition and/or move structure **302** within assembly area **316** during the performance of operations **327.** This movement may be similar to that in fixed assembly systems currently used.

When operations **327** are completed, plurality of mobile robotic machines **326,** racks **325,** and other mobile objects in assembly system **308** may move to home location **376.** This movement may leave floor **318** clear and ready for other types of operations.

Further, with assembly system **308,** increased flexibility may be present in manufacturing different types of structures as compared to currently available manufacturing systems. For example, plurality of mobile robotic machines **326** may switch from assembling structure **302** in the form of wing **310** to fuselage **312** or to engine **314** by receiving new programs from programs **350** from computer system **320.**

Also, the assembly of a particular type of structure may be facilitated by the selection of needed supplies from supplies **360** on racks **325.** With programs **350** for a particular type of structure, number of locations **352** may change. Plurality of mobile robotic machines **326** may provide a capability to move to different locations within number of locations **352** needed for different types of structures.

This movement may not require rerouting of power lines, conduits, trenches, rails, and/or other suitable types of cables. Further, de-attaching and reattaching robotic machines in new locations also may be avoided. As a result, less time may be needed to change assembly system **308** from one type of structure to another. Making changes to assemble different types of structures may be performed with less time and cost as compared to currently available systems.

Also, assembly system **308** may be used to assemble other types of structures other than those for aircraft. With a change in programs **350** and/or supplies **360,** assembly system **308** may be used to assemble structures for other objects such as, for example, without limitation, cars, submarines, ships, tanks, and/or other suitable objects.

Computer-system **320** also may monitor the health of various components in assembly system **308.** For example, computer system **320** may monitor health **378** for plurality of mobile robotic machines **326.** The level and/or amount of supplies **360** on racks **325** also may be monitored by computer system **320.**

When portions of plurality of mobile robotic machines **326** become worn out, those portions may be changed during the performance of operations **327.** These changes may be performed using number of servicing manipulators **332.** In this manner, the time to exchange worn out portions of plurality of mobile robotic machines **326** or to replace supplies **360** used by plurality of mobile robotic machines **326** may be reduced.

+Further, process **353** executing on computer system **320** may create history **380** for the assembly of structure **302.** History **380** may be analyzed to identify improvements and/or changes needed for future assembly operations.

In performing assembly of structure **302,** computer system **320** may transmit programs **350** to plurality of mobile robotic machines **326.** Plurality of mobile robotic machines **326** may move from home location **376** to number of locations **352.** Racks **325** may be positioned within appropriate locations in number of locations **352.**

Thereafter, operations **327** may begin to perform assembly of structure **302.** After assembly of structure **302** has been completed, plurality of mobile robotic machines **326** may return to home location **376.**

At that time, assembly area **316** may be ready for the assembly of another structure. The new structure may be the same type as structure **302** or a different type of structure. Further, the assembly of the next structure may be performed using plurality of mobile robotic machines **326** or another group of mobile robotic machines.

The illustration of assembly environment **300** in **Figure 3** is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in some advantageous embodiments, number of servicing manipulators **332** may be unnecessary. With this type of embodiment, plurality of mobile robotic machines **326** may return to racks **325** to obtain supplies **360.**

Further, in some advantageous embodiments, an additional structure, in addition to structure **302,** may be assembled within assembly area **316** by plurality of mobile robotic machines **326.** Plurality of mobile robotic machines **326** may move from location to location within number of locations **352** to perform assembly of both structures concurrently. Further, a particular mobile robotic machine within plurality of mobile robotic machines **326** may perform more than one task.

As one task is completed in assembly of structure **302,** a mobile robotic machine may receive a new program to perform another task needed to complete assembly of structure **302.** Also, in some advantageous embodiments, having both internal mobile robotic machines and external mobile robotic machines may be unnecessary. In some advantageous embodiments, a mobile robotic machine may perform both types of functions and may switch functions during the assembly of structure **302.**

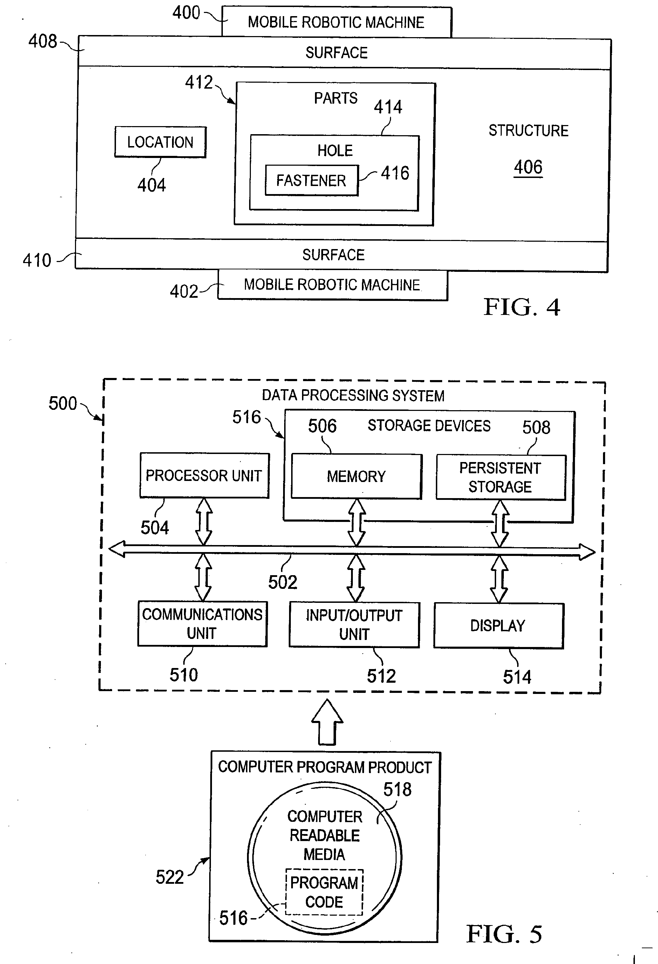

Turning now to **Figure 4****,** an illustration of an assembly process is depicted in accordance with an advantageous embodiment. In this depicted example, mobile robotic machine **400** and mobile robotic machine **402** may be part of plurality of mobile robotic machines **326** in **Figure 3** performing operations **327** on a structure.

In this illustrative example, mobile robotic machine **400** and mobile robotic machine **402** may move to location **404** on structure **406.** Structure **406** may be one example of a structure such as, for example, without limitation, structure **302** in **Figure 3****.** In this illustrative example, mobile robotic machine **400***may be located on surface **408** of structure **406,** and mobile robotic machine **402** may be located on surface **410** of structure **406.**

Mobile robotic machine **400** and mobile robotic machine **402** may perform clamping operations to clamp parts **412** to each other. Mobile robotic machine **400** may perform a drilling operation to drill hole **414** through parts **412.** Thereafter, mobile robotic machine **400** and mobile robotic machine **402** may install fastener **416** in hole **414** to secure parts **412** to each other. Mobile robotic machine **400** and mobile robotic machine **402** may then cease the clamping operation and move to another location to perform additional operations.

Turning now to **Figure 5****,** an illustration of a data processing system is depicted in accordance with an advantageous embodiment. In this illustrative example, data processing system **500** includes communications fabric **502,** which provides communications between processor unit **504,** memory **506,** persistent storage **508,** communications unit **510,** input/output (I/O) unit **512,** and display **514.** Data processing system **500** may be used in computer system **320,** motion control system **322,** wireless communications system **324,** and within plurality of mobile robotic machines **326.** Depending on the particular implementation, different architectures and/or configurations of data processing system **500** may be used.

Processor unit **504** serves to execute instructions for software that may be loaded into memory **506.** Processor unit **504** may be a set of one or more processors or may be a multiprocessor core, depending on the particular implementation. Further, processor unit **504** may be implemented using one or more heterogeneous processor systems in which a main processor is present with secondary processors on a single chip. As another illustrative example, processor unit **504** may be a symmetric multiprocessor system containing multiple processors of the same type.

Memory **506** and persistent storage **508** are examples of storage devices **516.** A storage device may be any piece of hardware that may be capable of storing information such as, for example, without limitation, data, program code in functional form, and/or other suitable information either on a temporary basis and/or a permanent basis. Memory **506,** in these examples, may be, for example, a random access memory or any other suitable volatile or non-volatile storage device.

Persistent storage **508** may take various forms depending on the particular implementation. For example, persistent storage **508** may contain one or more components or devices. For example, persistent storage **508** may be a hard drive, a flash memory, a rewritable optical disk, a rewritable magnetic tape, or some combination of the above. The media used by persistent storage **508** also may be removable. For example, a removable hard drive may be used for persistent storage **508.**

Communications unit **510,** in these examples, provides for communications with other data processing systems or devices. In these examples, communications unit **510** may be a network interface card. Communications unit **510** may provide communications through the use of either or both physical and wireless communications links.

Input/output unit **512** allows for input and output of data with other devices that may be connected to data processing system **500.** For example, input/output unit **512** may provide a connection for user input through a keyboard, a mouse, and/or some other suitable input device. Further, input/output unit **512** may send output to a printer. Display **514** provides a mechanism to display information to a user.

Instructions for the operating system, applications, and/or programs may be located in storage devices **516,** which are in communication with processor unit **504** through communications fabric **502.** In these illustrative examples, the instructions are in a functional form on persistent storage **508.** These instructions may be loaded into memory **506** for execution by processor unit **504.** The processes of the different embodiments may be performed by processor unit **504** using computer-implemented instructions, which may be located in a memory, such as memory **506.**

These instructions are referred to as program code, computer usable program code, or computer readable program code that may be read and executed by a processor in processor unit **504.** The program code in the different embodiments may be embodied on different physical or tangible computer readable media, such as memory **506** or persistent storage **508.**

Program code **516** may be located in a functional form on computer readable media **518** that may be selectively removable and may be loaded onto or transferred to data processing system **500** for execution by processor unit **504.** Program code **516** and computer readable media **518** form computer program product **522** in these examples. In one example, computer readable media **518** may be in a tangible form such as, for example, an optical or magnetic disk that may be inserted or placed into a drive or other device that may be part of persistent storage **508** for transfer onto a storage device, such as a hard drive that may be part of persistent storage **508.**

In a tangible form, computer readable media **518** also may take the form of a persistent storage, such as a hard drive, a thumb drive, or a flash memory that may be connected to data processing system **500.** The tangible form of computer readable media **518** may also be referred to as computer recordable storage media. In some instances, computer readable media **518** may not be removable.

Alternatively, program code **516** may be transferred to data processing system **500** from computer readable media **518** through a communications link to communications unit **510** and/or through a connection to input/output unit **512.** The communications link and/or the connection may be physical or wireless in the illustrative examples. The computer readable media also may take the form of non-tangible media, such as communications links or wireless transmissions containing the program code.

In some illustrative embodiments, program code **516** may be downloaded over a network to persistent storage **508** from another device or data processing system for use within data processing system **500.** For instance, program code stored in a computer readable storage medium in a server data processing system may be downloaded over a network from the server to data processing system **500.** The data processing system providing program code **516** may be a server computer, a client computer, or some other device capable of storing and transmitting program code **516.**

The different components illustrated for data processing system **500** are not meant to provide architectural limitations to the manner in which different embodiments may be implemented. The different illustrative embodiments may be implemented in a data processing system including components in addition to or in place of those illustrated for data processing system **500.**

Other components shown in **Figure 5** can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system **500** may be any hardware apparatus that may store data. Memory **506,** persistent storage **508,** and computer readable media **518** are examples of storage devices in a tangible form.

In another example, a bus system may be used to implement communications fabric **502** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **506** or a cache such as found in an interface and memory controller hub that may be present in communications fabric **502.**

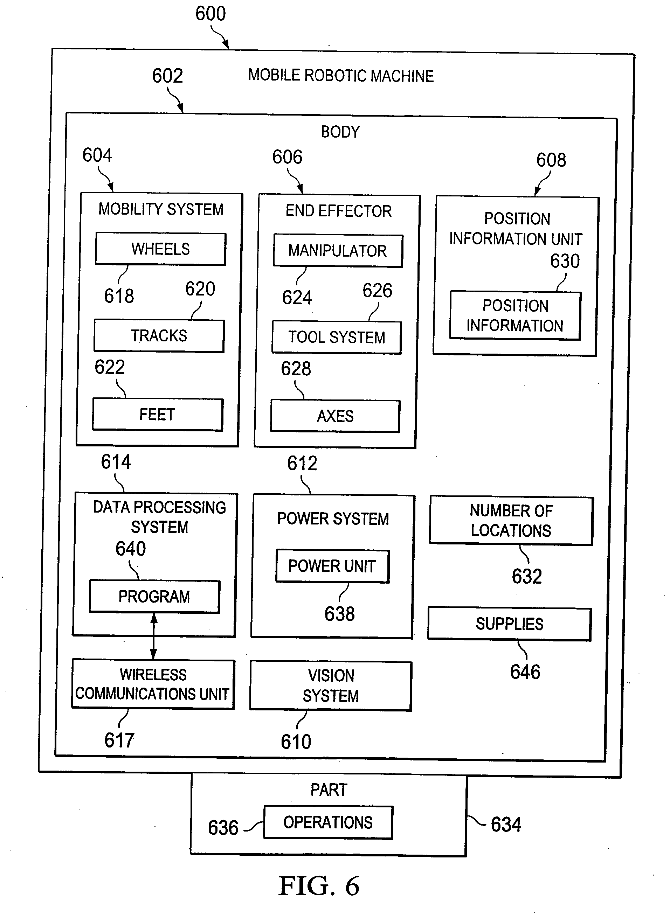

Turning now to **Figure 6****,** an illustration of a mobile robotic machine is depicted in accordance with an advantageous embodiment. Mobile robotic machine **600** is an example of one manner in which plurality of mobile robotic machines **326** in **Figure 3** may be implemented. Mobile robotic machine **600** may be autonomous and may perform operations without requiring continuous instructions from different sources.

As illustrated, mobile robotic machine **600** may include body **602,** mobility system **604,** end effector **606,** position information unit **608,** vision system **610,** power system **612,** data processing system **614,** and other suitable components.

Body **602** may provide a structure and/or housing for which different components may be located on and/or in mobile robotic machine **600.** Mobility system **604** may provide mobility for mobile robotic machine **600.** Mobility system **604** may take various forms.

Mobility system **604** may include, for example, without limitation, wheels **618,** tracks **620,** feet **622,** and/or other suitable components. End effector **606** may be a component that provides mobile robotic machine **600** a capability to perform operations. End effector **606** may be manipulator **624** and/or tool system **626.** Manipulator **624** may hold and/or manipulate tool system **626.**

Tool system **626** may be a number of tools. For example, tool system **626** may include, without limitation, a drill, a fastener device, a sealing device, and/or some other suitable type of tool. In these illustrative examples, end effector **606** may be moved about three or more of axes **628.**

Position information unit **608** may be capable of generating position information **630** for number of locations **632** for mobile robotic machine **600.** For example, without limitation, number of locations **632** may be a location for body **602,** end effector **606,** and/or some other suitable location on mobile robotic machine **600.** Position information **630** may be in a three-dimensional space using three or more of axes **628.** Vision system **610** may include, for example, without limitation, a camera, a data processing system, and/or software capable of identifying objects, positions of objects, and/or other information needed to perform operations on a part.

Vision system **610** may provide mobile robotic machine **600** a capability to view part **634** and operations **636** being performed on part **634.** Power system **612** may provide power to operate mobile robotic machine **600.** Power system **612** may generate power using power unit **638.** Power unit **638** may be removable and/or replaceable. Power unit **638** may be changed when power unit **638** becomes depleted.

Power unit **638** may be, for example, without limitation, a battery and/or some other suitable type of power unit. For example, power unit **638** may be a wireless transfer unit capable of receiving power without using wires. In these illustrative examples, data processing system **614** may receive and store program **640.**

Data processing system **614** may control the operation of mobile robotic machine **600** by executing program **640** in these examples. Program **640** may be received through wireless communications unit **617** and/or some other source. In these illustrative examples, wireless communications unit **617** may provide the capability to transfer information, such as position information **530,** between mobile robotic machine **600** and other components within assembly environment **300** in **Figure 3****.**

In these illustrative examples, mobile robotic machine **600** may reconfigure itself to perform various operations within operations **636.** This reconfiguration may be performed by receiving a new version of program **640** and supplies **646.** Supplies **646** may include, for example, without limitation, end effectors, tools, parts, and/or other suitable components needed to perform operations **636.**

Further, in executing program **640,** mobile robotic machine **600** may be capable of determining what parts of tool system **626,** manipulator **624,** and/or other components in mobile robotic machine **600** may begin to wear out and require replacement. Program **640** may provide mobile robotic machine **600** a capability to request supplies **646** as needed. Further, program **640** also may provide mobile robotic machine **600** a capability to request service and/or maintenance. Further, if mobile robotic machine **600** is unable to perform certain operations within operations **636,** mobile robotic machine **600** may send a request to another mobile robotic machine to perform those operations.

Mobile robotic machine **600** may provide a capability to move to different locations without requiring cables, fixed attachments, rails, and/or other components currently used by robotic machines in assembly systems.

The illustration of mobile robotic machine **600** in **Figure 6** is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in some advantageous embodiments, position information unit **608** may be unnecessary. Position information unit **608** may be unnecessary if the motion control system uses only cameras to identify position information. In yet other advantageous embodiments, mobile robotic machine **600** may include an additional end effector in addition to end effector **606.**

Mobile robotic machine **600** is an example of a machine that may be used to implement one or more of plurality of mobile robotic machines **326** in **Figure 3****.** For example, mobile robotic machine **600** may be used to implement an external mobile robotic machine, a servicing manipulator, a flexible fixture, an internal mobile robotic machine, and/or some other suitable type of mobile robotic machine.

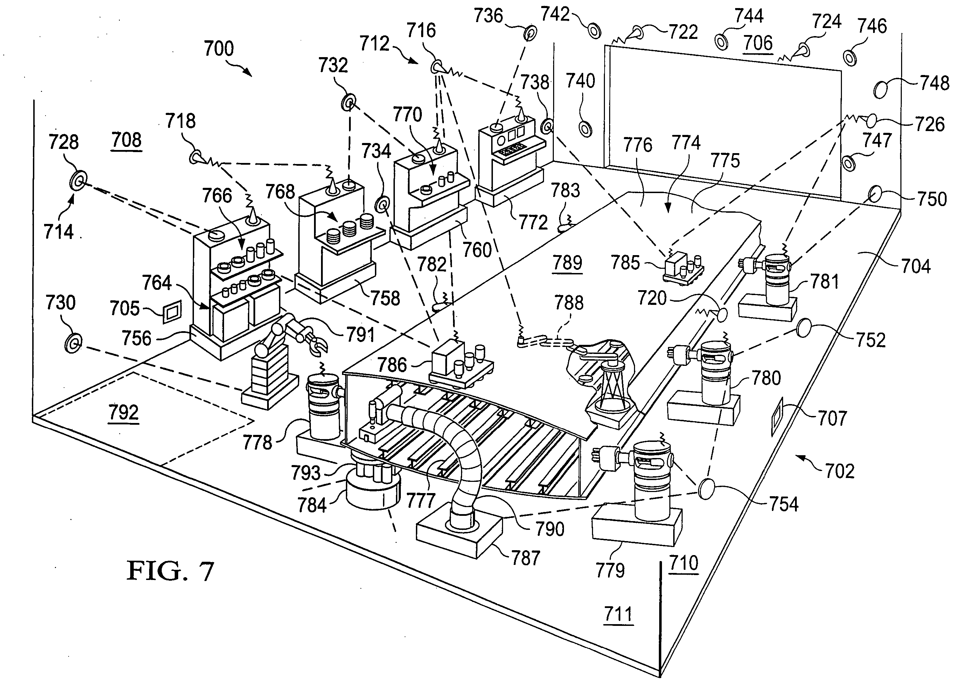

Turning now to **Figure 7****,** an illustration of an assembly environment is depicted in accordance with an advantageous embodiment. In this illustrative example, assembly environment **700** is an example of one implementation for assembly environment **300** in **Figure 3****.** In this example, assembly area **702** in assembly environment **700** may include floor **704,** wall **706,** wall **708,** wall **710,** and wall **711.** In this illustrative example, wall **710** and wall **711** may be shown in an exposed view.

In this view, components for wireless communications system **712** and motion control system **714** may be seen attached to walls **706, 708,** and **710.** Wireless communications system **712** may have wireless communications units **716, 718, 720, 722, 724,** and **726.** These wireless communications units may be receivers, transmitters, transceivers, and/or some other suitable type of wireless communications units.

Motion control system **714** may include motion control units **728, 730, 732, 734, 736, 738, 740, 742, 744, 746, 747, 748, 750, 752,** and **754.** These motion control units may be, for example, without limitation, receivers, cameras, radio frequency identification readers, and/or other suitable components that may be capable of being used to generate position information.

In this illustrative example, racks **756, 758,** and **760** may be located against wall **708.** Supplies such as, for example, batteries **764,** tools **766,** cassettes **768,** and effectors **770** may be supplied by these racks. System controller **772** is an example of a computer system that may be used to control the assembly of structure **774** in these examples.

Structure **774** may be wing **775.** Wing **775** may have exterior **776** and interior **777.** Flexible fixtures **778, 779, 780, 781, 782,** and **783** may hold wing **775** to perform operations to assemble wing **775.**

The assembly of wing **775,** in these examples, may be performed using external mobile robotic machines **784, 785,** and **786,** which perform operations on exterior **776** of wing **775.** The assembly of wing **775** also may be performed using internal mobile robotic machines **787** and **788,** which may perform operations on interior **777** of wing **775.** In this illustrative example, external robotic machines **785** and **786** move on surface **789** of wing **775** to perform operations.

In this depicted example, internal mobile robotic machine **787** may have flexible arm **790,** which may allow internal mobile robotic machine **787** to reach into interior **777** of wing **775** to perform operations. Additionally, servicing manipulator **791** may provide supplies and/or maintenance for the different mobile robotic machines performing operations to assemble wing **775.**

Additionally, utility outlets **705** and **707** may be present on walls **708** and **710,** respectively. Utility outlets **705** and **707** may provide connections to utilities such as, for example, electricity, water, air, and/or other suitable utilities. Utility outlets **705** and **707** may be used during assembly operations and/or for maintenance after assembly operations have been completed.

Home location **792** may be a location in which the different mobile robotic machines may be located prior to beginning assembly operations. Home location **792** also may be a location that the mobile robotic machines may return to after completing operations.

Different mobile robotic machines may work in conjunction with each other to perform operations. For example, internal mobile robotic machine **787** may work in conjunction with external robotic machine **784** to perform various operations, such as drilling and/or fastener installation.

For example, external robotic machine **784** may have electromagnet **793** and may clamp portions of wing **775** to perform various operations in conjunction with internal mobile robotic machine **787.** Other mobile robotic machines may work independently such as, for example, external mobile robotic machine **785,** external mobile robotic machine **786,** and internal mobile robotic machine **788.**

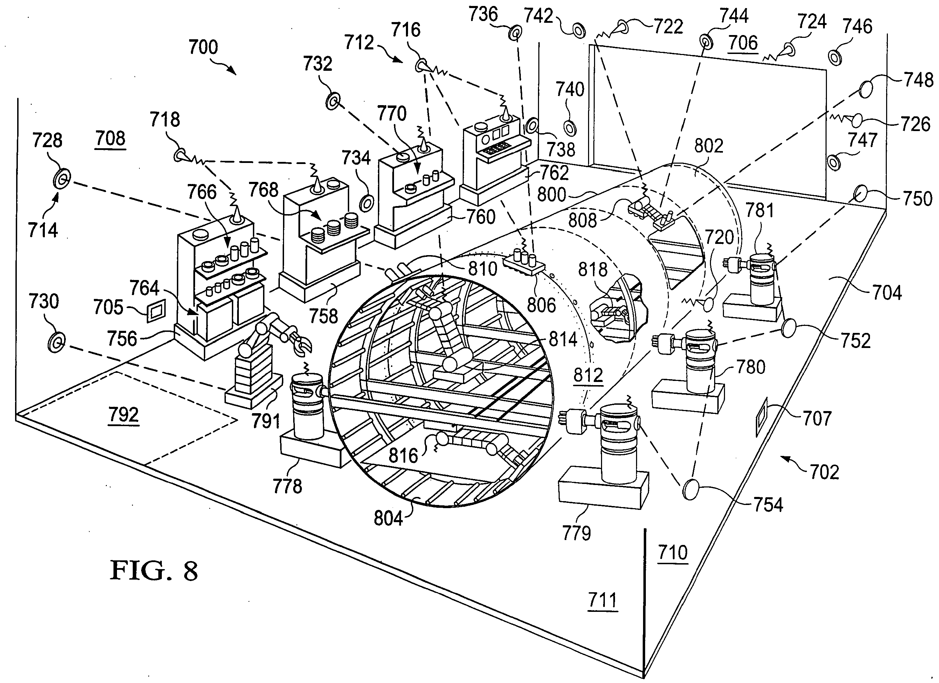

Turning now to **Figure 8****,** an illustration of an assembly environment is depicted in accordance with an advantageous embodiment. In this illustrative example, assembly environment **700** may be reconfigured for use in performing operations to assemble fuselage **800.** Fuselage **800** may have exterior **802** and interior **804.**

With this type of structure, external mobile robotic machines **806, 808,** and **810** may perform operations on surface **812** of exterior **802** of fuselage **800.** Internal mobile robotic machines **814, 816,** and **818** may perform operations on interior **804** of fuselage **800.**

The illustration of assembly environment **700** in **Figure 7** and **Figure 8** is only an illustrative example of one manner in which an assembly environment can be implemented to assemble a structure. Assembly environment **700** may provide increased flexibility in one or more of the different advantageous embodiments to assemble different types of structures. Assembly area **702** may be used to manufacture different types of structures, such as wing **775** and fuselage **800.**

The reconfiguration of assembly environment **700** may be performed quickly by changing the programs for mobile robotic machines, adding mobile robotic machines, removing mobile robotic machines, or other suitable configuration changes. These changes may be made more quickly and/or with less expense as compared to changes needed to reconfigure current assembly systems.

For example, if wing **775** may be assembled before fuselage **800,** the mobile robotic machines used to assemble wing **775** may be reprogrammed and/or replaced as needed with other mobile robotic machines to assemble fuselage **800** in assembly area **702.** These changes may be performed without requiring the time and/or expense needed to make changes to currently available assembly systems. Rerouting of wires, rails, trenches, and other components may be unnecessary with this type of assembly system.

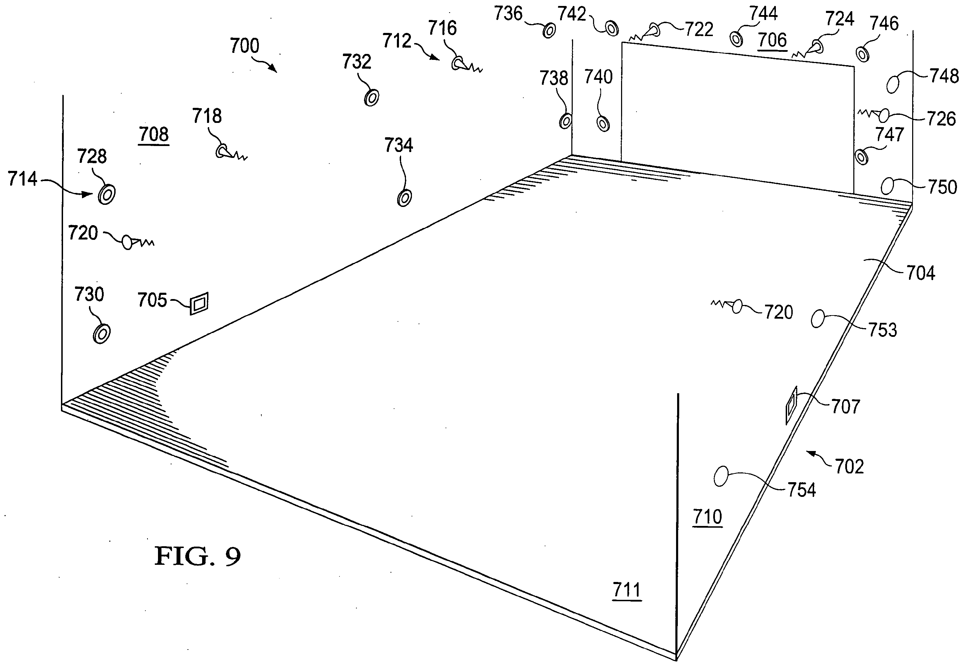

With reference now to **Figure 9****,** an illustration of an assembly area is depicted in accordance with an advantageous embodiment. In this illustrative example, assembly area **702** is illustrated without the different racks and/or mobile robotic machines. Assembly area **702** is an illustration of an area when no operations are being performed to assemble structures. A lack of fixed robotic machines, rails, trenches, conduits, cables, and other structures may allow for easy reconfiguration of assembly area **702** for other operations. Further, the lack of fixed structures also may allow for easier maintenance of assembly area **702.**

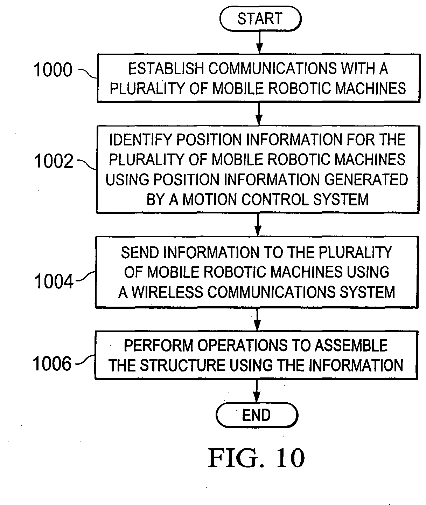

Turning now to **Figure 10****,** an illustration of a flowchart of a process for assembling a structure is depicted in accordance with an advantageous embodiment. The process illustrated in **Figure 10** may be implemented in assembly environment **300** in **Figure 3****.**

The process may begin by establishing communications with plurality of mobile robotic machines **326** (operation **1000).** Plurality of mobile robotic machines **326** may be capable of moving to number of locations **352** and performing operations **327** to assemble structure **302** in assembly area **316** using wireless communications system **324.**

Position information **346** for plurality of mobile robotic machines **326** may be identified using position information **346** generated by motion control system **322** (operation **1002).** Position information **346** may be positions of plurality of mobile robotic machines **326** and/or different parts of plurality of mobile robotic machines **326.** Information **338** may be sent to plurality of mobile robotic machines **326** using wireless communications system **324** (operation **1004).** Information **338** may include position information. Operations **327** may be performed to assemble structure **302** using information **338** (operation **1006),** with the process terminating thereafter.

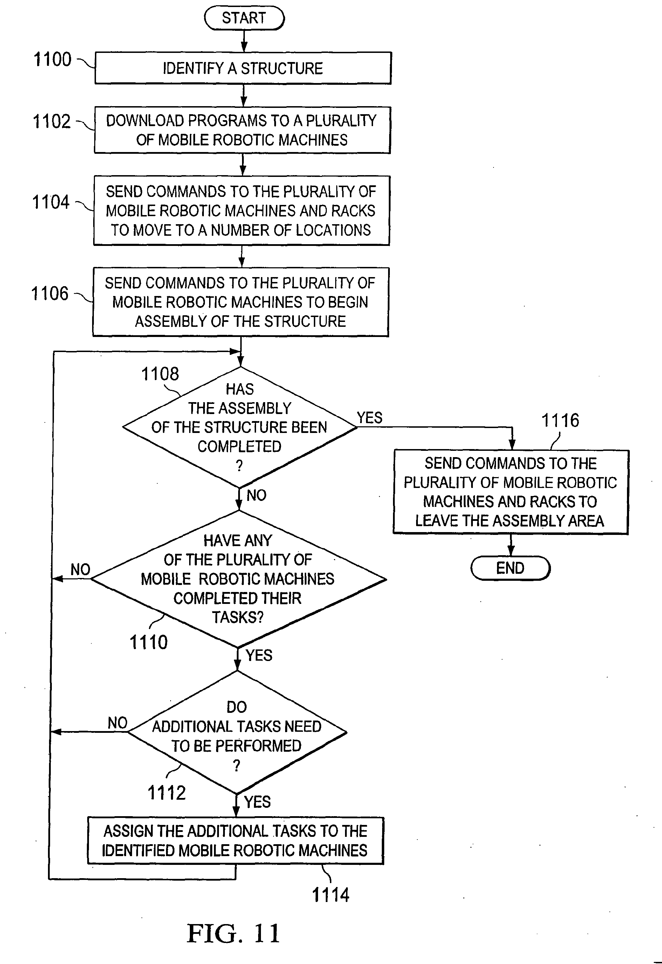

With reference now to **Figure 11****,** an illustration of a flowchart of a process for assembling a structure is depicted in accordance with an advantageous embodiment. The process illustrated in **Figure 11** may be implemented in assembly environment **300** in **Figure 3****.** For example, the process may be implemented in process **355** in computer system **320** to control the assembly of structure **302** in **Figure 3****.**

The process may begin by identifying structure **302** (operation **1100).** Thereafter, the process may download programs **350** to plurality of mobile robotic machines **326** (operation **1102).** The process may then send commands **348** to plurality of mobile robotic machines **326** and racks **325** to move to number of locations **352** (operation **1104).** The process may then send commands **348** to plurality of mobile robotic machines **326** to begin assembly of structure **302** (operation **1106).**

A determination may be made as to whether the assembly of structure **302** has been completed (operation **1108).** If the assembly of structure **302** has not been completed, a determination may be made as to whether any of plurality of mobile robotic machines **326** have completed their tasks (operation **1110).** These tasks may be tasks within tasks **329.**

If any of plurality of mobile robotic machines **326** have completed their tasks, a determination may be made as to whether additional tasks need to be performed (operation **1112).** In some examples, some mobile robotic machines may complete tasks before other mobile robotic machines. In these examples, these mobile robotic machines may perform other tasks that may shorten the time needed to assemble structure **302.** Mobile robotic machines that may not have tasks may be assigned tasks that may aid other mobile robotic machines to complete their tasks more quickly. Further, if one mobile robotic machines needs maintenance or
service, another mobile robotic machine that has completed its tasks may perform tasks for the mobile robotic machine needing maintenance or service.

If additional tasks need to be performed, the process may assign the additional tasks to the identified mobile robotic machines (operation **1114).** In operation **1114,** commands **348** and/or programs **350** may be sent to the identified mobile robotic machines. The process may then return to operation **1108.** With reference again to operation **1112,** if additional tasks do not need to be performed, the process may return to operation **1108.** The process also may return to operation **1108** from operation **1110** if none of plurality of mobile robotic machines **326** have completed their tasks.

With reference again to operation **1108,** if the assembly of structure **302** has been completed, the process then may send commands **348** to plurality of mobile robotic machines **326** and racks **325** to leave assembly area **316** (operation **1116),** with the process terminating thereafter. In operation **1116,** some of plurality of mobile robotic machines **326** may return to home location **376.** Number of flexible fixtures **334** within plurality of mobile robotic machines **326** may move structure **302** to another area for further processing and/or storage.

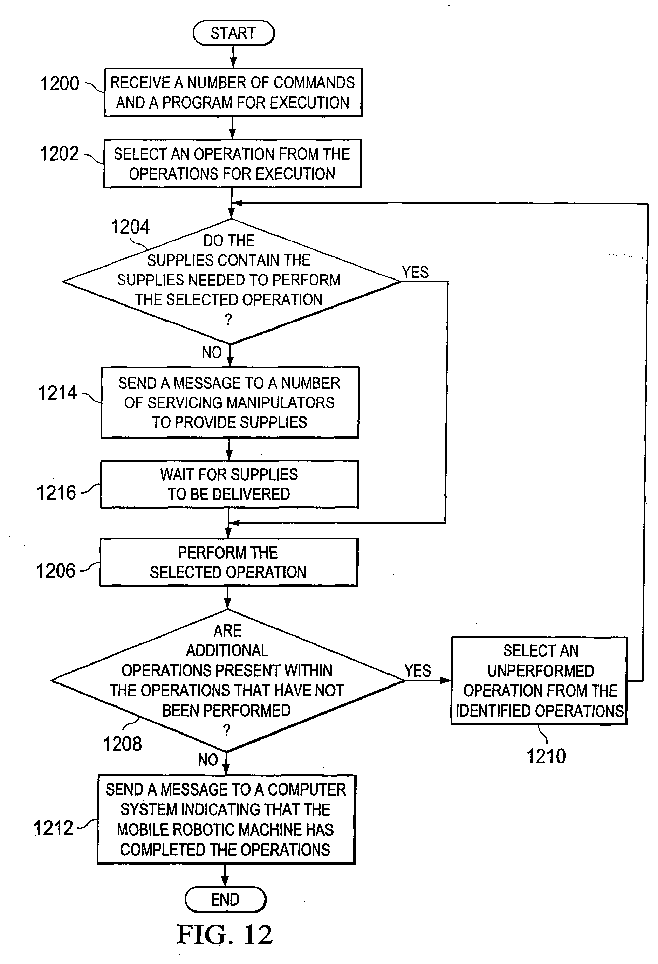

Turning next to **Figure 12****,** an illustration of a flowchart of a process for assembling a structure is depicted in accordance with an advantageous embodiment. In this illustrative example, the process in **Figure 12** may be implemented in a mobile robotic machine, such as mobile robotic machine **600** in **Figure 6****.** This process may be implemented by data processing system **614** in **Figure 6****.**

The process may begin by receiving a number of commands and a program for execution (operation **1200).** The process may then select an operation from operations **636** for execution (operation **1202).** A determination may be made as to whether supplies **646** contain supplies needed to perform the selected operation (operation **1204).**

If supplies are present, the process may perform the selected operation (operation **1206).** This operation may be, for example, without limitation, drilling a hole, clamping a part in coordination with another mobile robotic machine, milling a part, applying sealant, performing an inspection of a part, and/or other suitable operations.

After the operation has been performed, a determination may be made as to whether additional operations are present within operations **636** that have not been performed (operation **1208).** If additional operations are present, the process may select an unperformed operation from the identified operations (operation **1210),** with the process then returning to operation **1204.**

If all of the operations have been completed, the process may send a message to a computer system indicating that mobile robotic machine **600** has completed operations **636** (operation **1212),** with the process terminating thereafter. At this point, mobile robotic machine **600** may wait for additional commands.

With reference again to operation **1204,** if supplies **646** do not contain supplies needed to perform the identified operation, the process may then send a message to number of servicing manipulators **332** to provide supplies **646** (operation **1214).** The process may then wait for supplies **646** to be delivered (operation **1216).** When supplies **646** have been delivered, the process may then proceed to operation **1206** as described above. These supplies may include, for example, without limitation, fasteners, end effectors, tools, power units, and/or other suitable supplies.

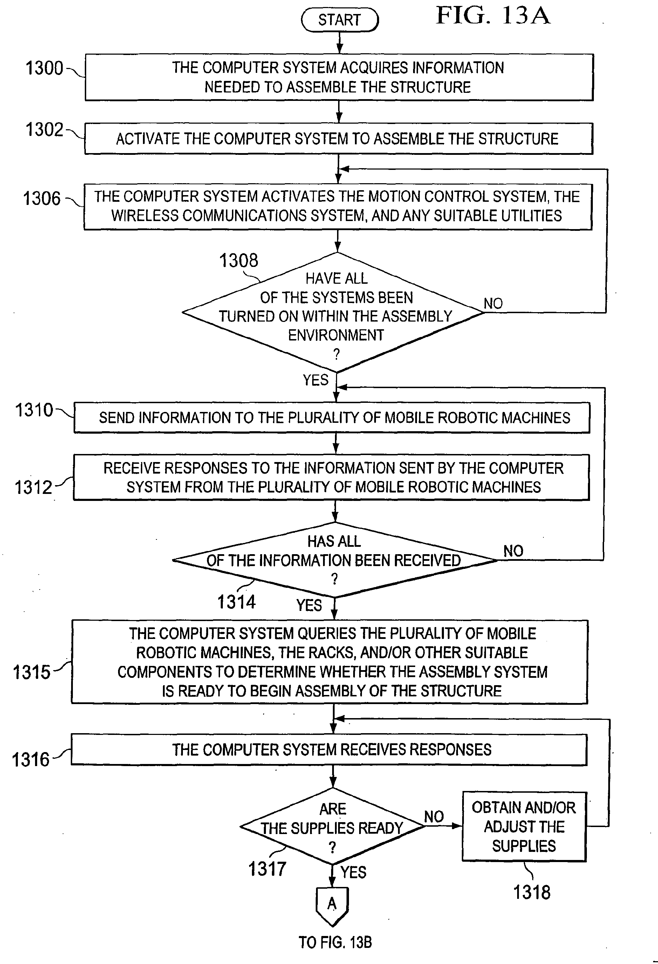

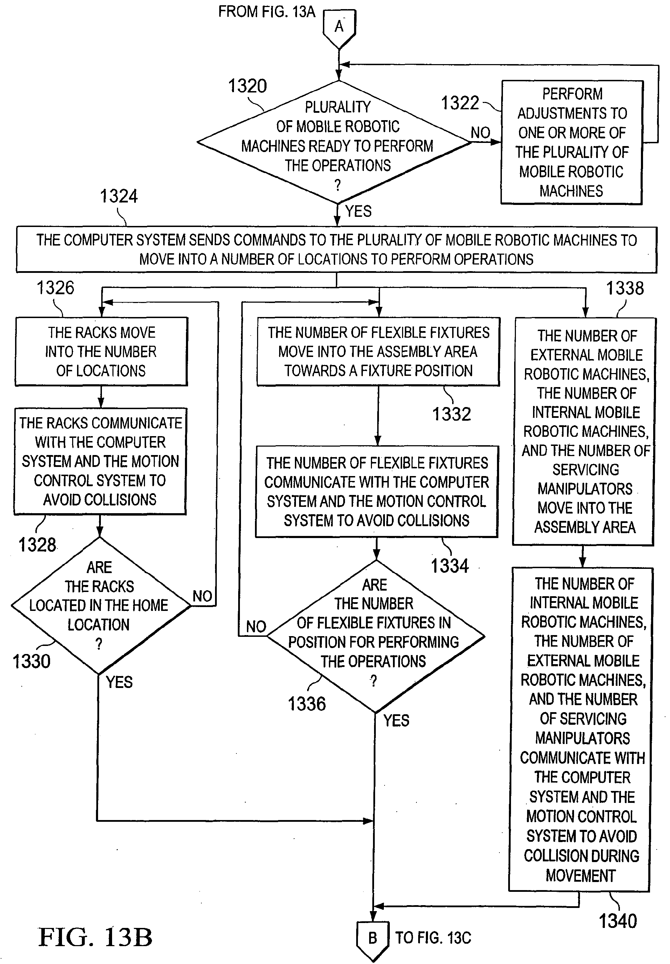

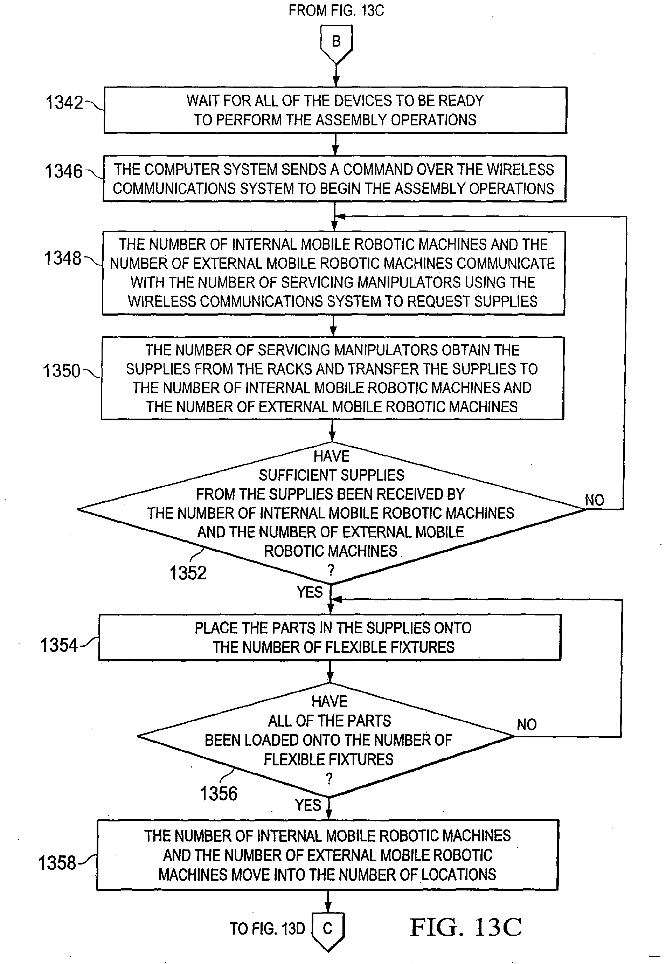

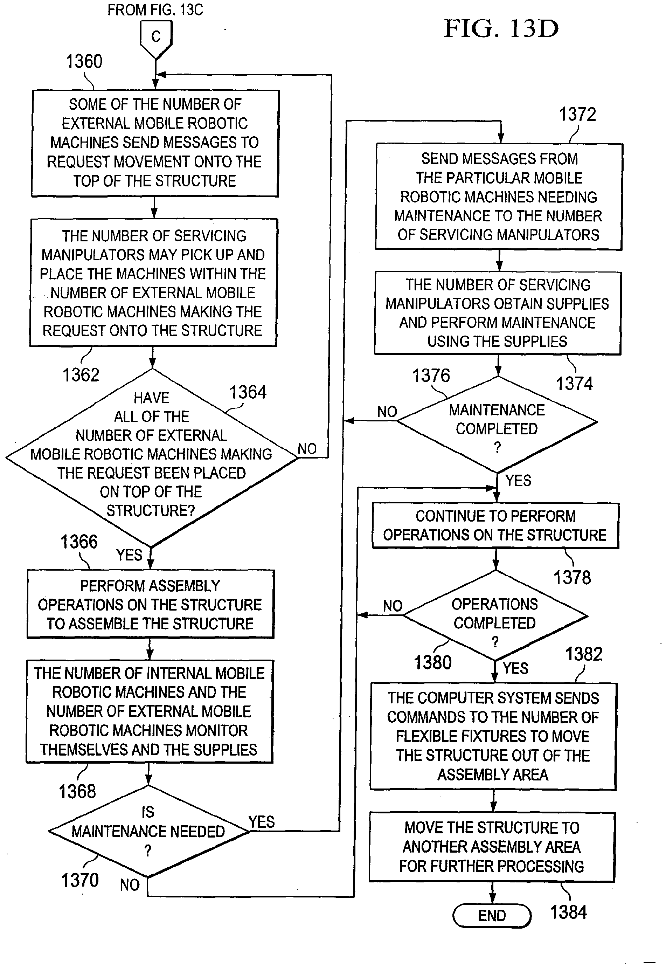

With reference now to **Figures 13A-13D****,** an illustration of a flowchart of a process for assembling an aircraft structure is depicted in accordance with an advantageous embodiment. The process illustrated in **Figures 13A-13D** are an example of one manner in which operations may be performed to assemble an aircraft structure. The process illustrated in **Figures 13A-13D** may be implemented using assembly environment **300** in **Figure 3****.**

The process may begin with computer system **320** acquiring information needed to assemble structure **302** (operation **1300).** This information may include, for example, without limitation, specifications, manufacturing plans, needed equipment, needed tools, needed parts, needed materials, and/or other suitable information. The process may then activate computer system **320** to assemble structure **302** (operation **1302).** Computer system **320** may activate motion control system **322,** wireless communications system **324,** and any suitable utilities (operation **1306).** A determination may be made as to whether all of the systems have been turned on within assembly environment **300** (operation **1308).** If all of the systems have not been turned on, the process may return to operation **1306.**

If all the systems in operation **1308** have been turned on, computer system **320** may send information **338** to plurality of mobile robotic machines **326** (operation **1310).** Information **338** may include, for example, without limitation, messages **340,** position information **346,** commands **348,** programs **350,** and/or other suitable information needed to perform operations **327** to assemble structure **302.**

Responses to the information sent by computer system **320** may be received from plurality of mobile robotic machines **326** (operation **1312).** A determination may be made as to whether all of information **338** has been received (operation **1314).** If all of information **338** has not been received, the process returns to operation **1310.**

When all of information **338** has been received, computer system **320** queries plurality of mobile robotic machines **326,** racks **325,** and/or other suitable components to determine whether assembly system **308** is ready to begin assembly of structure **302** (operation **1315).**

Computer system **320** may receive responses (operation **1316)** and may determine whether supplies **360** are ready (operation **1317).** If supplies **360** are not ready, supplies **360** are obtained and/or adjusted (operation **1318).** Operation **1318** may include calibrating and loading tools, end effectors, fastener cassettes, batteries, and/or other suitable supplies. The process then may return to operation **1316.**

If supplies **360** are ready, the process may determine whether plurality of mobile robotic machines **326** is ready to perform operations **327** (operation **1320).** If all of plurality of mobile robotic machines **326** are not ready to perform operations **327,** adjustments to one or more of plurality of mobile robotic machines **326** may be performed (operation **1322),** with the process then returning to operation **1320.**

Operation **1322** may include, for example, without limitation, calibrating and/or setting up number of internal mobile robotic machines **328,** number of external mobile robotic machines **330,** number of servicing manipulators **332,** number of flexible fixtures **334,** and/or other suitable machines. When all of plurality of mobile robotic machines **326** are ready, computer system **320** may send commands **348** to plurality of mobile robotic machines **326** to move into number of locations **352** to perform operations **327** (operation **1324).**

In response to receiving commands **348,** racks **325** may move into number of locations **352** (operation **1326).** Racks **325** may communicate with computer system **320** and motion control system **322** to avoid collisions (operation **1328).** A determination may then be made as to whether racks **325** are located in home location **376** (operation **1330).** If racks **325** are not in home location **376,** the process may return to operation **1326.**

In response to receiving commands **348** in operation **1324,** number of flexible fixtures **334** may move into assembly area **316** towards a fixture position (operation **1332).** Number of flexible fixtures **334** may communicate with computer system **320** and motion control system **322** to avoid collisions (operation **1334).** A determination may then be made as to whether number of flexible fixtures **334** are in position for performing operations **327** (operation **1336).** If number of flexible fixtures **334** are not in position, the process may return to operation **1332.**

Also, in response to commands **348** in operation **1324,** number of external mobile robotic machines **330,** number of internal mobile robotic machines **328,** and number of servicing manipulators **332** may move into assembly area **316** (operation **1338).** Number of internal mobile robotic machines **328,** number of external mobile robotic machines **330,** and number of servicing manipulators **332** may communicate with computer system **320** and motion control system **322** to avoid collision during movement (operation **1340).**

In operations **1330, 1336,** and **1340,** the process may wait for all of the devices to be ready to perform operations **327** (operation **1342).** When all of the devices are ready to perform operations **327,** computer system **320** may send a command over wireless communications system **324** to begin assembly operations **327** (operation **1346).** Assembly operations may be a subset of operations **327** and may involve positioning and securing parts to each other to form structure **302.**

Number of internal mobile robotic machines **328** and number of external mobile robotic machines **330** may communicate with number of servicing manipulators **332** using wireless communications system **324** to request supplies **360** (operation **1348).** Number of servicing manipulators **332** may obtain supplies **360** from racks **325** and transfer supplies **360** to number of internal mobile robotic machines **328** and number of external mobile robotic machines **330** (operation **1350).**

A determination may be made as to whether sufficient supplies from supplies **360** have been received by number of internal mobile robotic machines **328** and number of external mobile robotic machines **330** (operation **1352).** If sufficient supplies from supplies **360** have not been received, the process may return to operation **1348.** These supplies may include parts, fasteners, sealant, paint, adhesive, and/or other suitable supplies needed to assemble structure **302.** Once sufficient supplies have been received, parts in supplies **360** may be placed onto number of flexible fixtures **334** (operation **1354).**

A determination may then be made as to whether all of the parts have been loaded onto number of flexible fixtures **334** (operation **1356).** If all of the parts have not been loaded, the process may return to operation **1354.** Otherwise, number of internal mobile robotic machines **328** and number of external mobile robotic machines **330** may move into number of locations **352** (operation **1358).**

Some of number of external mobile robotic machines **330** may send messages **340** to request movement onto the top of structure **302** (operation **1360).** Number of servicing manipulators **332** may pick up and place the machines within number of external mobile robotic machines **330** making the request onto structure **302** (operation **1362)**.

A determination may be made as to whether all of number of external mobile robotic machines **330** making the request have been placed on top of structure **302** (operation **1364).** If all of number of external mobile robotic machines **330** making the request have not been placed on top of structure **302,** the process may return to operation **1360.**

Otherwise, the process may then perform assembly operations **327** on structure **302** to assemble structure **302** (operation **1366).** These assembly operations may include synchronized assembly operations between number of internal mobile robotic machines **328** and number of external mobile robotic machines **330.** Number of internal mobile robotic machines **328** and number of external mobile robotic machines **330** monitor themselves and supplies **360** (operation **1368)**.

A determination may be made as to whether maintenance is needed (operation **1370).** The maintenance may require replacements of end effectors **362,** power units **364,** tools **366,** fasteners **368,** and/or other suitable forms of supplies **360.**

If maintenance operations are needed, messages **340** may be sent from the particular mobile robotic machines needing maintenance to number of servicing manipulators **332** (operation **1372).** In response to receiving messages **340,** number of servicing manipulators **332** may obtain supplies **360** and perform maintenance using supplies **360** (operation **1374).**

A determination may be made as to whether maintenance has been completed (operation **1376).** If maintenance has not been completed, the process may return to operation **1372.** If maintenance operations are complete, the process may continue to perform operations **327** on structure **302** (operation **1378).** Operations **327** may include assembly of parts, inspections, and other suitable operations needed to assemble structure **302.** Thereafter, a determination may be made as to whether operations **327** have been completed (operation **1380).**

If operations **327** have not been completed, the process may return to operation **1378.** When operations **327** have been completed, computer system **320** may send commands **348** to number of flexible fixtures **334** to move structure **302** out of assembly area **316** (operation **1382).** Thereafter, structure **302** may be moved to another assembly area for further processing (operation **1384),** with the process then terminating.

With reference again to operation **1370,** if maintenance is not needed, the process continues to operation **1378** as described above.

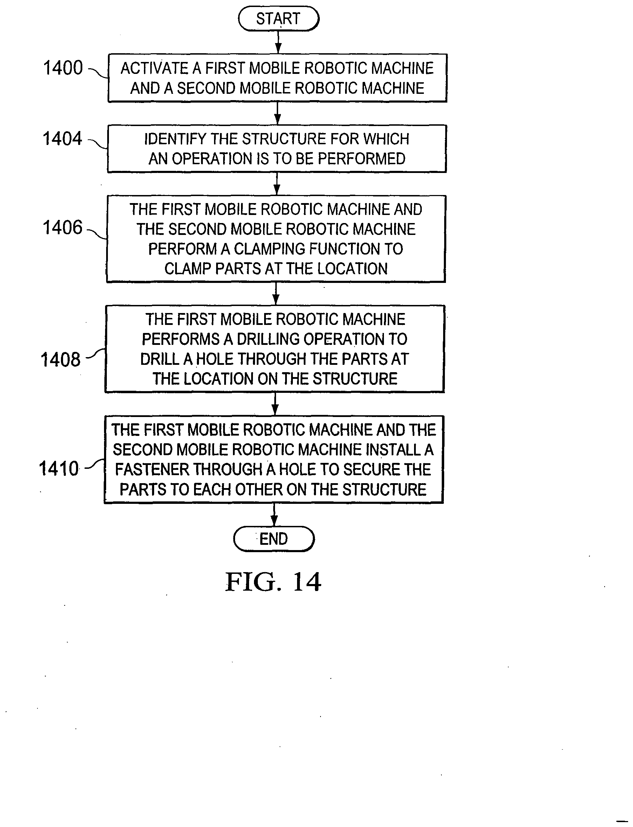

Turning now to **Figure 14****,** an illustration of a flowchart of a process for performing operations on a structure is depicted in accordance with an advantageous embodiment. The process illustrated in **Figure 14** may be implemented in an environment such as, for example, assembly environment **300** in **Figure 3****.**

The process may begin by activating a first mobile robotic machine and a second mobile robotic machine (operation **1400).** Thereafter, structure **302** may be identified for which an operation is to be performed (operation **1404).** The first mobile robotic machine may be adjacent to a first surface of structure **302,** while the second mobile robotic machine may be adjacent to a second surface of structure **302.**

The first mobile robotic machine and the second mobile robotic machine may perform a clamping function to clamp parts at the location (operation **1406).** The first mobile robotic machine may perform a drilling operation to drill a hole through the parts at the location on structure **302** (operation **1408).** The first mobile robotic machine and the second mobile robotic machine may install a fastener through a hole to secure the parts to each other on structure **302** (operation **1410),** with the process terminating thereafter.

The flowcharts and block diagrams in the different depicted embodiments illustrate the architecture, functionality, and operation of some possible implementations of apparatus and methods in different advantageous embodiments. In this regard, each block in the flowcharts or block diagrams may represent a module, segment, function, and/or a portion of an operation or step.

In some alternative implementations, the function or functions noted in the blocks may occur out of the order noted in the figures. For example, in some cases, two blocks shown in succession may be executed substantially concurrently, or the blocks may sometimes be executed in the reverse order, depending upon the functionality involved.

Thus, the different advantageous embodiments provide a method and apparatus for assembling structures in a manner that may provide increased flexibility to the different types of structures that may be assembled within a particular assembly area. The different advantageous embodiments may provide a capability to alter the type of structure being assembled in a manner that may be faster and/or less expensive as compared to current assembly systems. The different advantageous embodiments may avoid a need for fixed rails, fixed robotic machines, trenches, conduits in the floor, and other structures that may require time and expense to move and/or modify.

The description of the different advantageous embodiments has been presented for purposes of illustration and description, and it is not intended to be exhaustive or limited to the embodiments in the form disclosed. Many modifications and variations will be apparent to those of ordinary skill in the art. Further, different advantageous embodiments may provide different advantages as compared to other advantageous embodiments.

Although the different advantageous embodiments have been described with respect to structures of an aircraft, other advantageous embodiments may be applied to other types of objects. For example, without limitation, other advantageous embodiments may be applied to a wing, a fuselage, an engine, a tank, a submarine hull, a spacecraft, a space station, a surface ship, and a car.

The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus comprising:
a plurality of mobile robotic machines (326) capable of moving to a number of locations (352) in an assembly area (316) and capable of performing operations to assemble a structure (302) in the assembly area;
a wireless communications system (324) capable of providing communications with the plurality of mobile robotic machines within the assembly area; and
a motion control system (322) capable of generating position information (346) for the plurality of mobile robotic machines in the assembly area and communicating the position information to the plurality of mobile robotic machines; wherein:
performing the operations to assemble the structure uses the position information and comprises:
communicating messages between the plurality of mobile robotic machines (326); and
performing a number of operations to assemble the structure using the messages;
the wireless communications system is adapted to exchange information between the plurality of mobile robotic machines; and
the plurality of mobile robotic machines comprises:
an external mobile robotic machine (330) having an electromagnet (793) and capable of moving around an exterior (304) of the structure and capable of performing a number of first operations on the exterior of the structure; and
an internal mobile (328) robotic machine having a flexible arm (790) and capable of performing a number of second operations in an interior (306) of the structure and capable of performing the number of second operations in conjunction with the number of first operations performed by the external mobile robotic machine to assemble the structure.

2. The apparatus of claim 1, wherein the position information comprises at least one of a position of an arm on a mobile robotic machine, a position of an end effector (362) on the mobile robotic machine, a position of a body of the mobile robotic machine, and a position of a part (336).

3. The apparatus of claim 1, further comprising:
a computer system (320), wherein the computer system is capable of exchanging information with the plurality of mobile robotic machines, wherein the information comprises at least one of a command (348), data, a position of a mobile robotic machine (346), and a program (350) capable of being executed by the mobile robotic machine in the plurality of mobile robotic machines.

4. The apparatus of claim 1, wherein the motion control system comprises:
a plurality of sensors (356); and
a computer capable of identifying positions of the plurality of mobile robotic machines using the plurality of sensors.

5. The apparatus of claim 4, wherein the plurality of sensors comprises a number of types of sensors selected from at least one of a camera, a receiver capable of receiving global positioning system information from the plurality of mobile robotic machines, and a radio frequency identification sensor reader.

6. The apparatus of claim 4, wherein the plurality of sensors are located on at least one of the plurality of mobile robotic machines and at selected locations in the assembly area.

7. The apparatus of claim 1, wherein the operations comprise at least one of fastening parts, inspecting parts, drilling holes, clamping parts, installing fasteners, and applying sealant.

8. A method for assembling a structure, the method comprising:
establishing communications with a plurality of mobile robotic machines (326) capable of moving to a number of locations (352) in an assembly area (316) and capable of performing operations to assemble the structure (302) in the assembly area using a wireless communications system;
identifying position information for the plurality of mobile robotic machines using a motion control system (322);
sending information to the plurality of mobile robotic machines, wherein the information comprises the position information; and
performing the operations to assemble the structure using the position information by:
communicating messages between the plurality of mobile robotic machines (326); and
performing a number of operations to assemble the structure using the messages;
wherein:
the step of establishing communications comprises exchanging information between the plurality of mobile robotic machines; and
the plurality of mobile robotic machines comprises:
an external mobile robotic machine (330) having an electromagnet (793) and capable of moving around an exterior (304) of the structure and capable of performing a number of first operations on the exterior of the structure; and
an internal mobile robotic machine (328) having a flexible arm (790) and capable of performing a number of second operations in an interior (306) of the structure and capable of performing the number of second operations in conjunction with the number of first operations performed by the external mobile robotic machine to assemble the structure.

9. The method of claim 8, wherein the step of sending the information to the plurality of mobile robotic machines comprises:
sending a number of programs (350) to the plurality of mobile robotic machines.

10. The method of claim 8, wherein the step of sending the information to the plurality of mobile robotic machines comprises:
sending the position information to a number of the plurality of mobile robotic machines.

## Patentansprüche

1. Vorrichtung mit
einer Mehrzahl von mobilen Robotermaschinen (326), die in der Lage sind, sich zu einer Anzahl von Orten (352) in einem Montagebereich (316) zu bewegen und in der Lage sind, in dem Montagebereich Operationen zum Montieren einer Struktur (302) durchzuführen;
einem drahtlosen Kommunikationssystem (324), das in der Lage ist, mit der Mehrzahl von mobilen Robotermaschinen innerhalb des Montagebereichs zu kommunizieren; und
einem Bewegungssteuerungssystem (322), das in der Lage ist, Positionsinformationen (346) für die Mehrzahl von mobilen Robotermaschinen in dem Montagebereich zu erzeugen und die Positionsinformationen an die Mehrzahl von mobilen Robotermaschinen zu kommunizieren; wobei:
das Ausführen der Operationen zum Montieren der Struktur die Positionsinformationen verwendet und umfasst:
das Kommunizieren von Nachrichten zwischen der Mehrzahl von mobilen Robotermaschinen (326); und
das Durchführen einer Anzahl von Operationen zum Montieren der Struktur unter Verwendung der Nachrichten;
das drahtlose Kommunikationssystem eingerichtet ist, um Informationen zwischen der Mehrzahl von mobilen Robotermaschinen auszutauschen; und
die Mehrzahl mobiler Robotermaschinen umfasst:
eine externe mobile Robotermaschine (330) mit einem Elektromagneten (793), die in der Lage ist, sich um ein Äußeres (304) der Struktur herum zu bewegen und eine Anzahl von ersten Operationen an dem Äußeren der Struktur durchzuführen; und
eine interne mobile (328) Robotermaschine mit einem flexiblen Arm (790), die in der Lage ist, eine Anzahl von zweiten Operationen in einem Innenraum (306) der Struktur durchzuführen, und die in der Lage ist, die Anzahl von zweiten Operationen in Verbindung mit der Anzahl von von der externen mobilen Robotermaschine durchgeführten ersten Operationen durchzuführen, um die Struktur zu montieren.

2. Vorrichtung nach Anspruch 1, bei der die
Positionsinformationen mindestens eine von einer Position eines Arms an einer mobilen Robotermaschine, einer Position eines Endeffektors (362) an der mobilen Robotermaschine, einer Position eines Körpers der mobilen Robotermaschine und einer Position eines Teils (336) umfassen.

3. Vorrichtung nach Anspruch 1, ferner mit
einem Computersystem (320), wobei das Computersystem in der Lage ist, Informationen mit der Mehrzahl von mobilen Robotermaschinen auszutauschen, wobei die Informationen mindestens eines von einem Befehl (348), Daten, einer Position einer mobilen Robotermaschine (346) und einem Programm (350) umfassen, das von der mobilen Robotermaschine aus der Mehrzahl von mobilen Robotermaschinen ausführbar ist.

4. Vorrichtung nach Anspruch 1, bei der das Bewegungssteuerungssystem umfasst:
eine Mehrzahl von Sensoren (356); und
einen Computer, der in der Lage ist, Positionen der Mehrzahl von mobilen Robotermaschinen unter Verwendung der Mehrzahl von Sensoren zu identifizieren.

5. Vorrichtung nach Anspruch 4, bei der die Mehrzahl von Sensoren eine Anzahl von Sensortypen umfasst, die aus mindestens einem von einer Kamera, einem Empfänger, der in der Lage ist, GPS-Informationen von der Mehrzahl von mobilen Robotermaschinen zu empfangen, und einem Funkfrequenz-Identifikationssensor-Lesegerät ausgewählt sind.

6. Vorrichtung nach Anspruch 4, bei der die Mehrzahl von Sensoren auf mindestens einer der Mehrzahl von mobilen Robotermaschinen und an ausgewählten Stellen im Montagebereich angeordnet ist.

7. Vorrichtung nach Anspruch 1, bei der die Operationen mindestens eines von Befestigen von Teilen, Prüfen von Teilen, Bohren von Löchern, Einspannen von Teilen, Installieren von Befestigungselementen und Auftragen von Dichtmittel umfassen.

8. Verfahren zum Montieren einer Struktur, wobei das Verfahren umfasst:
Herstellen von Verbindungen mit einer Mehrzahl von mobilen Robotermaschinen (326), die in der Lage sind, sich zu einer Anzahl von Orten (352) in einem Montagebereich (316) zu bewegen und die in der Lage sind, in dem Montagebereich Operationen zum Montieren der Struktur (302) unter Verwendung eines drahtlosen Kommunikationssystems durchzuführen;
Identifizieren von Positionsinformation für die Mehrzahl von mobilen Robotermaschinen unter Verwendung eines Bewegungssteuerungssystems (322);
Senden von Information an die Mehrzahl von mobilen Robotermaschinen, wobei die Information die Positionsinformation umfasst; und
Ausführen der Operationen zum Montieren der Struktur unter Verwendung der Positionsinformation durch:
Kommunizieren von Nachrichten zwischen der Mehrzahl von mobilen Robotermaschinen (326); und
Ausführen einer Anzahl von Operationen zum Montieren der Struktur unter Verwendung der Nachrichten; wobei:
der Schritt des Herstellens von Verbindungen das Austauschen von Information zwischen der Mehrzahl von mobilen Robotermaschinen umfasst; und
die Mehrzahl von mobilen Robotermaschinen umfasst:
eine externe mobile Robotermaschine (330) mit einem Elektromagneten (793), die in der Lage ist, sich um ein Äußeres (304) der Struktur herum zu bewegen und eine Anzahl von ersten Operationen an dem Äußeren der Struktur durchzuführen; und
eine interne mobile Robotermaschine (328) mit einem flexiblen Arm (790), die in der Lage ist, eine Anzahl von zweiten Operationen in einem Innenraum (306) der Struktur auszuführen, und die in der Lage ist, die Anzahl von zweiten Operationen in Verbindung mit der Anzahl von von der externen mobilen Robotermaschine ausgeführten ersten Operationen auszuführen, um die Struktur zu montieren.

9. Verfahren nach Anspruch 8, bei dem der Schritt des Sendens der Informationen an die Mehrzahl von mobilen Robotermaschinen umfasst:
Senden einer Anzahl von Programmen (350) an die Mehrzahl von mobilen Robotermaschinen.

10. Verfahren nach Anspruch 8, bei dem der Schritt des Sendens der Informationen an die Mehrzahl von mobilen Robotermaschinen umfasst:
Senden der Positionsinformationen an eine Anzahl der Mehrzahl von mobilen Robotermaschinen.

## Revendications

1. Appareil, comprenant :
une pluralité de machines robotiques mobiles (326) capables de se déplacer vers un certain nombre d'emplacements (352) dans une zone d'assemblage (316) et capables d'effectuer des opérations pour assembler une structure (302) dans la zone d'assemblage ;
un système de communication sans fil (324) capable de fournir des communications avec la pluralité de machines robotiques mobiles à l'intérieur de la zone d'assemblage ; et
un système de commande de mouvement (322) capable de générer des informations de position (346) pour la pluralité de machines robotiques mobiles dans la zone d'assemblage et de communiquer les informations de position à la pluralité de machines robotiques mobiles ; dans lequel :
l'exécution des opérations d'assemblage de la structure utilise les informations de position et comprend les étapes consistant à :
communiquer des messages entre la pluralité de machines robotiques mobiles (326) ; et
effectuer un certain nombre d'opérations pour assembler la structure en utilisant les messages ;
le système de communication sans fil est adapté pour échanger des informations entre la pluralité de machines robotiques mobiles ; et
la pluralité de machines robotiques mobiles comprend :
une machine robotique mobile externe (330) présentant un électroaimant (793) et capable de se déplacer autour d'un extérieur (304) de la structure et capable d'effectuer un certain nombre de premières opérations sur l'extérieur de la structure ; et
une machine robotique mobile interne (328) présentant un bras flexible (790) et capable d'effectuer un certain nombre de secondes opérations dans un intérieur (306) de la structure, et capable d'effectuer le certain nombre de secondes opérations conjointement avec le certain nombre de premières opérations effectuées par la machine robotique mobile externe pour assembler la structure.

2. Appareil selon la revendication 1, dans lequel les informations de position comprennent au moins une parmi une position d'un bras sur une machine robotique mobile, une position d'un effecteur d'extrémité (362) sur la machine robotique mobile, une position d'un corps de la machine robotique mobile et une position d'une pièce (336).

3. Appareil selon la revendication 1, comprenant en outre :
un système informatique (320), dans lequel le système informatique est capable d'échanger des informations avec la pluralité de machines robotiques mobiles, dans lequel les informations comprennent au moins un parmi une instruction (348), des données, une position d'une machine robotique mobile (346), et un programme (350) capable d'être exécuté par la machine robotique mobile dans la pluralité de machines robotiques mobiles.

4. Appareil selon la revendication 1, dans lequel le système de commande de mouvement comprend :
une pluralité de capteurs (356) ; et
un ordinateur capable d'identifier des positions de la pluralité de machines robotiques mobiles en utilisant la pluralité de capteurs.

5. Appareil selon la revendication 4, dans lequel la pluralité de capteurs comprend un certain nombre de types de capteurs sélectionnés parmi au moins une caméra, un récepteur capable de recevoir des informations de système de positionnement global à partir de la pluralité de machines robotiques mobiles, et un lecteur de capteur d'identification radiofréquence.

6. Appareil selon la revendication 4, dans lequel la pluralité de capteurs sont situés sur au moins une de la pluralité de machines robotiques mobiles et à des emplacements sélectionnés dans la zone d'assemblage.

7. Appareil selon la revendication 1, dans lequel les opérations comprennent au moins une parmi une fixation de pièces, une inspection de pièces, un perçage de trous, un serrage de pièces, une installation de fixations et une application d'un produit d'étanchéité.

8. Procédé d'assemblage d'une structure, le procédé comprenant les étapes consistant à :
établir des communications avec une pluralité de machines robotiques mobiles (326) capables de se déplacer vers un certain nombre d'emplacements (352) dans une zone d'assemblage (316) et capables d'effectuer des opérations pour assembler la structure (302) dans la zone d'assemblage en utilisant un système de communication sans fil ;
identifier des informations de position pour la pluralité de machines robotiques mobiles en utilisant un système de commande de mouvement (322) ;
envoyer des informations à la pluralité de machines robotiques mobiles, dans lequel les informations comprennent les informations de position ; et
effectuer les opérations d'assemblage de la structure en utilisant les informations de position par l'intermédiaire des étapes consistant à :
communiquer des messages entre la pluralité de machines robotiques mobiles (326) ; et
effectuer un certain nombre d'opérations pour assembler la structure en utilisant les messages ;
dans lequel :
l'étape d'établissement de communications comprend un échange d'informations entre la pluralité de machines robotiques mobiles ; et
la pluralité de machines robotiques mobiles comprend :
une machine robotique mobile externe (330) présentant un électroaimant (793) et capable de se déplacer autour d'un extérieur (304) de la structure et capable d'effectuer un certain nombre de premières opérations sur l'extérieur de la structure ; et
une machine robotique mobile interne (328) présentant un bras flexible (790) et capable d'effectuer un certain nombre de secondes opérations dans un intérieur (306) de la structure et capable d'effectuer le certain nombre de secondes opérations conjointement avec le certain nombre de premières opérations effectuées par la machine robotique mobile externe pour assembler la structure.

9. Procédé selon la revendication 8, dans lequel l'étape d'envoi des informations à la pluralité de machines robotisées mobiles comprend l'étape consistant à :
envoyer un certain nombre de programmes (350) à la pluralité de machines robotiques mobiles.

10. Procédé selon la revendication 8, dans lequel l'étape d'envoi des informations à la pluralité de machines robotisées mobiles comprend l'étape consistant à :
envoyer les informations de position à un certain nombre de la pluralité de machines robotiques mobiles.
